# EUROPÄISCHE PATENTANMELDUNG

(11) **EP 1 066 749 A2**
(43) Veröffentlichungstag der Anmeldung: **10.01.2001**
(21) Anmeldenummer: 00113612.6
(22) Anmeldetag: 28.06.2000
(51) Int. Cl.: A01G 1/04, A23N 15/04

(54) **Verfahren und Vorrichtung zum Bearbeiten von Pilzen o. dgl.**

(30) Priorität: 29.06.1999 DE 19929510
(71) Anmelder: Wiesenhof-Pilzland Vertriebsgesellschaft mbH, 49429 Visbek-Rechterfeld (DE)
(72) Erfinder: Wesjohann, Erich, 49429 Rechterfeld (DE)
(74) Vertreter: Eisenführ, Speiser & Partner

(57) **Zusammenfassung**

Die Erfindung betrifft ein Verfahren zum Bearbeiten von Pilzen o. dgl. Das erfindungsgemäße Verfahren ist dadurch gekennzeichnet, daß die Pilze unmittelbar nach einem manuellen Ernten separat auf einer im vorzugsweise ebenen Aufnahmevorrichtung abgelegt und gekühlt werden.

## Beschreibung

Die vorliegende Erfindung betrifft ein Verfahren und eine Vorrichtung zum Bearbeiten von Pilzen o. dgl.

Pilze wie z. B. Champignons werden in bekannter Weise in klimatisierten und abgedunkelten Räumen gezüchtet. Die Pilze sind dabei in mehreren Ebenen übereinander in mit Substrat oder Kompost gefüllten Kästen oder Beeten auf sogenannten Stellagen angeordnet. Die Pilze werden in regelmäßigen Abständen, nachdem sie eine bestimmte Größe erreicht haben, manuell abgeerntet.

In sogenannten Kistenbetrieben sind die Pilze in separaten, stapelbaren Kisten angeordnet, die zum Abernten komplett aus dem klimatisierten Raum entnommen werden. Anschließend werden die Kisten an einen zentralen Ort transportiert, wo die Pilze manuell abgepflückt werden. Ein Nachteil bei dieser Vorgehensweise in Kistenbetrieben besteht darin, daß möglicherweise auf den Pilzen oder dem Substrat vorhandene Krankheitserreger durch den Transport der Kisten innerhalb des Betriebs weiter verbreitet werden können, so daß sich derartige Erreger innerhalb des Betriebs verteilen.

Während der Ernte im Stellagenbetrieb steht die Pflückerin im klimatisierten Plückraum auf einer gelegentlich als Gondel bezeichneten Vorrichtung, die an einer Seite einer Stellage in eine Schiene eingehängt und mit Hilfe von Laufrollen verfahrbar ist. Jeder einzelne Pilz wird dabei von einer Pflückerin regelmäßig mit einer Hand gepflückt.

Bekanntermaßen werden die mit einer Hand im Stellagenbetrieb gepflückten Pilze nebeneinander liegend und übereinander gestapelt in Schalen abgelegt. Die Stengel der Pilze werden noch vor der Ablage in die Schalen mit einem Messer manuell abgeschnitten. Anschließend werden die in den Schalen liegenden Pilze gekühlt und verpackt.

Nachteilig bei der bekannten Vorgehensweise ist es, daß die manuell abgepflückten Pilze im ungekühlten Zustand beim Ablegen oder nach dem Ablegen in den Schalen Druckstellen bekommen können. Darüber hinaus können die Pilze während des Abschneidens des Stengels beschädigt werden oder sich durch das Abschneiden des Stengels im ungekühlten Zustand verfärben. Auch hat sich gezeigt, daß die Kühlung der in den Schalen liegenden, gestapelten Pilze eine recht große Zeit in Anspruch nimmt, da die in den Pilzen enthaltene Wärme schlecht aus den gestapelten Pilzen abgeführt werden kann und darüberhinaus die Wandungen der Schalen einer Kühlung entgegenwirken.

Aufgabe der vorliegenden Erfindung ist es, ein Verfahren und eine Vorrichtung zum Ernten von Pilzen bereitzustellen, das bzw. die die Nachteile des Standes der Technik vermeidet und eine Verarbeitung von Pilzen hoher Qualität ermöglicht. Insbesondere soll ein Verfahren bereitgestellt werden, mit dem Pilze hoher Qualität erzeugt werden und die Hygiene in den Pilzbetrieben erhöht wird.

Die Erfindung löst die Aufgabe bei einem Verfahren zum Bearbeiten von Pilzen dadurch, daß die auf einer vorzugsweise ebenen Aufnahmevorrichtung separat abgelegten Pilze gekühlt werden.

Die erfindungsgemäße Kühlung der separat auf der Aufnahmevorrichtung abgelegten Pilze ist besonders effektiv und ermöglicht deshalb eine sehr rasche Kühlung der Pilze, da die Wärmeabfuhr aus einem Pilz und damit die Kühlung aufgrund der separaten Anordnung besonders hoch ist, da die für den Kühleffekt maßgebliche freie Oberfläche der Pilze groß ist, jedenfalls größer ist als im Fall einer im Stand der Technik bekannten Ablage der Pilze übereinander in einer Schale. Darüberhinaus wird die Kühlung nicht durch schalenförmige Behältnisse oder deren Wandungen, wie dies im Stand der Technik der Fall ist, negativ beeinflußt. Ein bei der Kühlung vorzugsweise verwendeter Luftstrom gelangt erfindungsgemäß erheblich besser an die Oberfläche der Pilze, so daß diesen Wärme effizient entzogen werden kann.

Die Erfindung löst die Aufgabe ferner dadurch bzw. wird dadurch weitergebildet, daß die Pilze unmittelbar nach einem manuellen Ernten separat auf einer im wesentlichen ebenen Aufnahmevorrichtung abgelegt werden.

Die Vorteile liegen im wesentlichen darin, daß die Pilze aufgrund der separaten Ablage jedes Pilzes auf der Aufnahmevorrichtung keine Druckstellen bekommen können und definiert abgelegt sind. Sie werden nicht - wie im Stand der Technik - direkt auf zum Verkauf geeigneten Verkaufs-Verpackungen oder Schalen teilweise übereinander abgelegt, sondern im wesentlichen vereinzelt auf einer Aufnahmevorrichtung. Eine Pflückerin kann die Pilze mit zwei Händen pflücken, was die Pflückleistung erhöht, und sie unverzüglich dannach auf der Aufnahmevorrichtung plazieren. Die Pilze können auf einfache Weise zusammen mit der im wesentlichen ebenen Aufnahmevorrichtung transportiert und weiterbearbeitet werden. Die Aufnahmevorrichtungen lassen sich einfach während der Ernte handhaben und anschließend zum Transport und für eine Bearbeitung der Pilze als Tragvorrichtung einsetzen.

Bei einer besonders bevorzugten Ausführungsform des erfindungsgemäßen Verfahrens ist vorgesehen, daß die Pilze auf einer mehrere Bohrungen aufweisenden Aufnahmeplatte abgelegt werden, wobei ein Pilzkopf auf der Aufnahmeplatte aufliegt und ein Pilzstengel in der Bohrung angeordnet ist, und die Pilze während der Kühlung auf der Aufnahmeplatte angeordnet sind. Der Kühleffekt wird hierbei weiter erhöht, da einerseits aufgrund der Auflage der Unterseiten der Pilzköpfe auf der Oberfläche der Aufnahmeplatte ein starker Wärmeentzug durch Wärmeleitung in die Aufnahmeplatte hinein stattfindet und die Aufnahmeplatte durch die Umgebungsluft gekühlt wird. Die für die Wärmeübertragung maßgebliche Oberfläche ist auf diese Weise ingesamt erheblich vergrößert. Die Kühlzeit wird stark reduziert gegenüber den bekannten Kühlverfahren.

Jeder Pilz hat eine definierte Lage auf der Aufnahmeplatte. Die Pilze lassen sich auf einfache Weise im Bereich der Bohrungen so plazieren, daß der Pilzstengel durch die Bohrung ragt. Durch die definierte Ablage der Pilze auf der Aufnahmeplatte lassen sich die Pilze anschließend auf besonders einfache Weise wieder von der Aufnahmeplatte entnehmen und weiterverarbeiten, beispielsweise verpacken.

In bevorzugter Weise sind die Pilze während der Kühlung in mehreren Reihen auf der Aufnahmevorrichtung bzw. der Aufnahmeplatte angeordnet. Eine größere Menge an zu verarbeitenden Pilzen läßt sich dadurch handhaben, daß die Pilze während der Kühlung auf mehreren, parallel und beabstandet zueinander angeordneten Aufnahmeplatten angeordnet sind. Auch der Kühleffekt wird hierbei insgesamt noch effizienter, da große Mengen von Pilzen platzsparend gekühlt werden.

Eine besonders bevorzugte Ausführungsform des erfindungsgemäßen Verfahrens zeichnet sich dadurch aus, daß die die Pilze aufnehmenden Aufnahmeplatten auf einer einen Rahmen und mehrere Tragschienen aufweisenden Transportvorrichtung gelagert sind. Auf diese Weise läßt sich die Handhabbarkeit der Pilze verbessern und der Durchsatz an Pilzen weiter erhöhen. Die Transportvorrichtung nimmt eine Vielzahl von Aufnahmeplatten auf und kann auf einfache Weise aus den sogenannten Zellen, in denen die Pilze gezüchtet werden, zunächst zum Kühlen und dann zur anschließenden Weiterverarbeitung transportiert werden.

Eine bevorzugte Variante des Verfahrens zeichnet sich dadurch aus, daß die Pilze durch Luft, vorzugsweise einen Luftstrom, gekühlt werden. Durch die Luftströmung und einer damit verbundenen Erhöhung des Wärmeübergangs durch Konvektion kann die Kühlzeit weiter verringert werden.

Gemäß einer besonders bevorzugten alternativen Ausführungsform ist der Feuchtigkeitsgehalt der Kühl-Luft bzw. des Luftstromes genau eingestellt. Es hat sich gezeigt, daß durch eine genaue Einstellung des Feuchtigkeitsgehalts vorzugsweise auf Werte von etwa 95 % bis 99 %, besonders bevorzugt 97 % bis 99 %, die Gewichtsverluste der Pilze während der Kühlung minimiert werden, so daß die Qualität des Pilzes während der Kühlung nicht oder nur minimal beeinträchtigt wird. Versuche haben gezeigt, daß die durch Kühlung verursachten Gewichtsverluste unter solchen Umständen nur etwa 0,5 % bis 1 % betragen. Weiterhin ist es gemäß einer Weiterbildung der Erfindung bevorzugt, daß die Temperatur der Luft bzw. des Luftstromes im Bereich zwischen 0 - 2°C, vorzugsweise bei 0,5°C liegt. Die Pilze werden vorzugsweise auf eine Kerntemperatur von etwa 2-4°C gekühlt.

Eine weitere Erhöhung des Kühleffekts kann dadurch bewirkt werden, daß der Luftstrom die Aufnahmevorrichtungen im wesentlichen parallel anströmt, so daß die Pilze und die Aufnahmeplatte gleichmäßig von dem Luftstrom abgekühlt werden.

Gemäß einer Weiterbildung der Erfindung ist vorgesehen, daß die Aufnahmeplatten nach der Kühlung mittels einer Schiebevorrichtung auf ein Transportband geschoben werden, so daß die Aufnahmeplatten automatisch weiter transportiert und von der Transportvorrichtung getrennt werden.

Gemäß einer alternativen Ausführungsform ist vorgesehen, daß die auf der Aufnahmevorrichtung angeordneten Pilze nach der Kühlung einer Schneidvorrichtung zugeführt und die Pilzstengel abgeschnitten werden. Durch die Abtrennung der Stengel nach der Kühlung wird der Pilz nur minimal durch den Schnitt in seiner Qualität beeinträchtigt, so daß ein sehr glattes und ansehnliches Schnittbild entsteht, welches gegenüber dem herkömmlichen Verfahren, bei dem Stengel vor der Kühlung manuell abgeschnitten wird, deutlich verbessert ist. Im Bereich der Schnittfläche sind weniger Verfärbungen zu beobachten.

Gemäß einer Weiterbildung ist vorgesehen, daß die Pilzstengel durch rotierende Messer abgetrennt werden. Besonders bevorzugt ist es dabei, daß die auf der Aufnahmevorrichtung angeordneten Pilze so der Schneidvorrichtung zugeführt werden, daß ein Pilzstengel von zwei rotierenden Messern erfaßt und abgetrennt wird. Zweckmäßigerweise sind zwei rotierenden Messer als Kreisscheiben ausgebildet und werden gegenläufig um parallele Rotationsachsen rotiert, wobei ein Pilzstengel den Kreisscheiben etwa mittig in einen Schnittbereich zwischen den Rotationsachsen zugeführt wird. Die als Messer ausgebildete Kreisscheiben drehen dabei im Schnittbereich "nach innen", so daß ein Pilzstengel "eingezogen" wird. Es hat sich in der Praxis gezeigt, daß sich auf diese Weise ein besonders glattes, sauberes Schnittbild ergibt, die Pilze, insbesondere die Pilzfüße nicht beschädigt werden und die auf der Aufnahmevorrichtung abgelegten Pilze während des Schneidens nicht ihre Position ändern und insbesondere nicht hochgeschoben werden.

In ebenfalls bevorzugter Weise ist vorgesehen, daß die Aufnahmebleche von einem pneumatisch hin- und herbewegbaren Schieber von der Transportvorrichtung abgeschoben werden und die Transportvorrichtung durch eine Hubvorrichtung relativ zu dem Schieber auf- und abbewegbar ist, so daß die mehreren auf der Transportvorrichtung übereinander angeordneten Aufnahmeplatten auf das Transportband geschoben werden können.

Die Erfindung löst die Aufgabe ferner bei einem Verfahren zum Verpacken von Pilzen, bei dem die auf einer Aufnahmevorrichtung im wesentlichen separat abgelegten Pilze mit einer Sensiervorrichtung erfaßt werden und anschließend ein separater Pilz mit einer Greifvorrichtung von der Aufnahmevorrichtung abgenommen und anschließend in einem Behältnis bzw. auf einem Transportband von der Greifvorrichtung abgelegt wird.

Durch eine erfindungsgemäße Erfassung der Pilze und ein anschließendes Herausgreifen mit Hilfe der Greifvorrichtung kann nicht nur auf einfache Weise eine Größensortierung vorgenommen werden, sondern auch eine weitgehend automatische Verpackung der Pilze. Beispielsweise können Pilze in gleicher Größe jeweils in einem Behältnis abgelegt werden, bzw. an ein Transportband abgegeben werden.

Vorzugsweise erkennt die Sensiervorrichtung optisch die Position und/oder Größe eines auf der Aufnahmevorrichtung angeordneten Pilzes und legt die Greifvorrichtung in Abhängigkeit von der erkannten Position und Größe eines Pilzes den Pilz an einem vorgegebenen Ort ab. Aufgrund der separaten Anordnung der Pilze auf der Aufnahmeplatte können die einzelnen Pilze zuverlässig von der Sensiereinrichtung erfaßt werden. Die Greifvorrichtung wird mit Hilfe einer Steuerungseinrichtung so gesteuert, daß die Pilze entweder direkt in eine Schale oder ein Transportband für Pilze einer bestimmten Größe abgelegt werden.

Eine besonders schonende Bearbeitung wird dadurch realisiert, daß die Greifvorrichtung mindestens einen Vakuumsaugkopf aufweist, der mit einem Pilzkopf zusammenwirkt und einen Pilz aufgrund eines Unterdrucks greift. Vorzugsweise weist der Saugkopf einen gepolsterten Kontaktring auf, der auf den Pilzkopf aufgesetzt wird. Die Qualität der verarbeiteten Pilze ist bei dieser schonenden Art des Greifens maximal. Zur Erhöhung der Durchsatzmengen von Pilzen weist die Greifvorrichtung mehrere individuell bewegbare Greifarme mit jeweils einem Saugkopf oder mehreren Saugköpfen auf.

Vorrichtungsgemäß löst die Erfindung die Aufgabe bei einer Vorrichtung zum Verarbeiten von Pilzen o. dgl. mit einer Kühlkammer, in die von einer Kühleinrichtung erzeugte Kühlluft einleitbar ist, durch eine in die Kühlkammer einbringbare Transportvorrichtung zur Aufnahme mindestens einer Aufnahmevorrichtung, auf der Pilze separat abgelegt sind. Die Transportvorrichtung mit einer Aufnahmevorrichtung, auf der die Pilze separat abgelegt sind, ermöglicht eine besonders effiziente Kühlung. Zur Vermeidung von Wiederholungen wird auf die obigen Beschreibungen des erfindungsgemäßen Kühlverfahrens Bezug genommen.

Vorzugsweise ist die Aufnahmevorrichtung als mit mehreren Bohrungen ausgebildete Aufnahmeplatte ausgebildet und weist die Transportvorrichtung mehrere Tragschienen auf, auf denen mehrere Aufnahmeplatten angeordnet sind. Hierbei sind die Pilzköpfe auf der Aufnahmeplatte angeordnet, während die Pilzstengel durch die Bohrung hindurchragen, wodurch der Kühleffekt weiter deutlich verbessert wird.

Weitere vorteilhafte Ausführungsformen der erfindungsgemäßen Vorrichtung sind in den Unteransprüchen angegeben.

Die Erfindung ist nachstehend anhand von Ausführungsbeispielen unter Bezugnahme auf die beiliegenden Zeichnungen beschrieben. Es zeigen:
- Fig. 1: ein Blockschaltbild zur Veranschaulichung einzelner Verfahrensschritte des erfindungsgemäßen Verfahrens;
- Fig. 2: eine erfindungsgemäße Aufnahmevorrichtung in Form einer im wesentlichen ebenen Aufnahmeplatte in einer Draufsicht;
- Fig. 3: ein alternatives Ausführungsbeispiel einer erfindungsgemäßen Aufnahmevorrichtung für Pilze;
- Fig. 4: eine schematische Seitenansicht einer mit Pilzen gefüllten Aufnahmeplatte;
- Fig. 5: mehrere mit auf Transportvorrichtungen angeordneten Pilzen gefüllte Kühlkammern zum Kühlen von Pilzen;
- Fig. 6: eine Transportvorrichtung zur Aufnahme von Pilzen in einer Seitenansicht;
- Fig. 7: die Transportvorrichtung gemäß Fig. 3 in einer Seitenansicht;
- Fig. 8: die Transportvorrichtung gemäß Fig. 3 und 4 in einer Draufsicht;
- Fig. 9: eine Schiebevorrichtung zum Abschieben von Aufnahmeplatten von einer Transportvorrichtung, ein Transportband und eine Schneidvorrichtung in einer Seitenansicht;
- Fig. 10: eine Schneidvorrichtung in einer Draufsicht;
- Fig. 11: ein Teil einer Schneidvorrichtung in einer Seitenansicht.

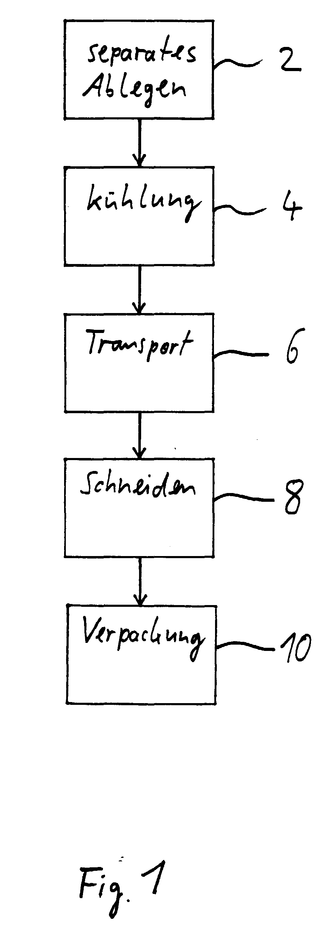

Anhand von Fig. 1 sind einige Verfahrensschritte des erfindungsgemäßen Verfahrens zum Bearbeiten von Pilzen o. dgl. veranschaulicht; anstelle von Pilzen könnte auch anderes Gemüse verarbeitet werden. Zunächst werden die Pilze nach dem manuellen Ernten, dem sogenannten Pflücken, separat auf einer Aufnahmevorrichtung abgelegt, vgl. Bezugszeichen 2 in Fig. 1. Die auf einer Aufnahmevorrichtung, vorzugsweise einer im wesentlichen ebenen Aufnahmeplatte abgelegten Pilze werden gekühlt, vgl. Kasten 4. Nach der Kühlung 4 werden die Pilze mit Hilfe einer Schiebevorrichtung auf ein Transportband geschoben, vgl. Kasten 6. Anschließend werden die Pilze einer Schneidvorrichtung zugeführt und die Pilzstengel werden dort von dem Pilzkopf abgetrennt, vgl. Kasten 8. Anschließend werden die von den Pilzstengeln befreiten Pilze in Behältnissen verpackt, vgl. Kasten 10.

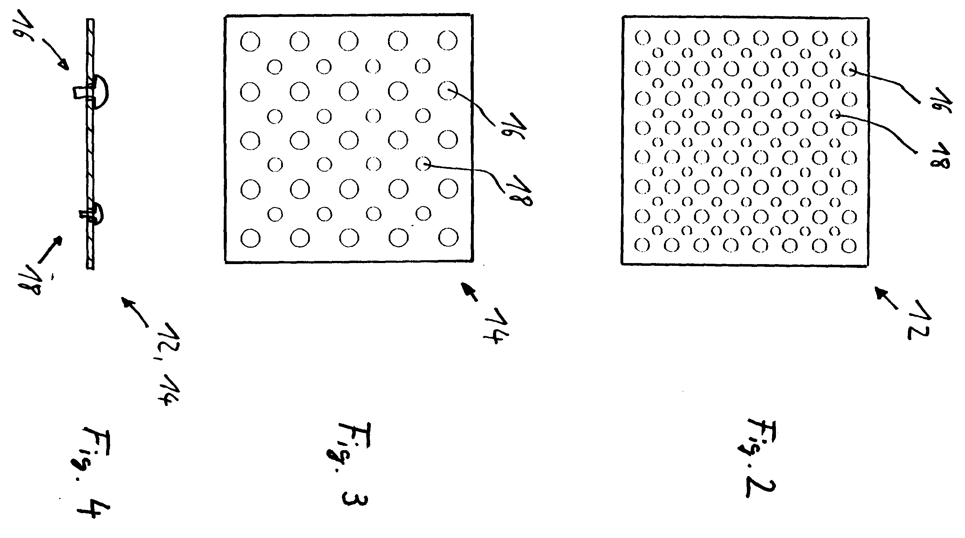

Die Pilze werden zunächst von den sogenannten Pflückerinnen separat auf in wesentlichen ebenen Aufnahmevorrichtungen in Form von anhand der Fig. 2 bis 4 veranschaulichten Aufnahmeplatten 12, 14 abgelegt. Die Aufnahmeplatten 12, 14 sind aus einem einer hohen Wärmeleitfähigkeit aufweisenden Material wie Aluminium o. dgl. ausgebildet und weisen eine quadratische Form auf. Jede Aufnahmeplatte 12, 14 ist mit mehreren kreisförmigen, in beabstandeten Reihen angeordneten Bohrungen 16, 18 versehen, die als Durchgangsbohrungen ausgebildet sind. Die Durchmesser der Bohrungen 16, 18 sind unterschiedlich, und die Reihen mit Bohrungen 18 geringerer Durchmesser sind mittig zwischen den Reihen aus Bohrungen 16 mit größerem Durchmesser angeordnet. Auf diese Weise kann eine besonders hohe Anzahl von Pilzen auf einer relativ geringen Fläche der Aufnahmeplatten 12, 14 angeordnet werden. Unterschiedlich große Pilze (klein, mittel, riesig) werden den unterschiedlich großen Bohrungen 16, 18 zugeordnet, wie Fig. 4 schematisch veranschaulicht.

Der Kopf eines Pilzes liegt mit seiner Unterseite auf einer Oberfläche der Aufnahmeplatte 12, 14 auf, und der Pilzstengel ragt durch die Bohrung 16, 18 hindurch. Aufgrund der Auflage des Pilzkopfes auf der Oberfläche ergibt sich eine gute Wärmeübertragung zwischen Pilz und Aufnahmeplatte 12, 14. Der Pilz ist darüber hinaus an der Aufnahmeplatte 12 fixiert, da der Pilzstengel durch die Bohrung 16, 18 hindurchragt. Eine Pflückerin kann die Pilze während der Ernte manuell greifen und auf einfache Weise auf die in Fig. 4 skizzierte Weise an der Aufnahmeplatte 12, 14 ablegen.

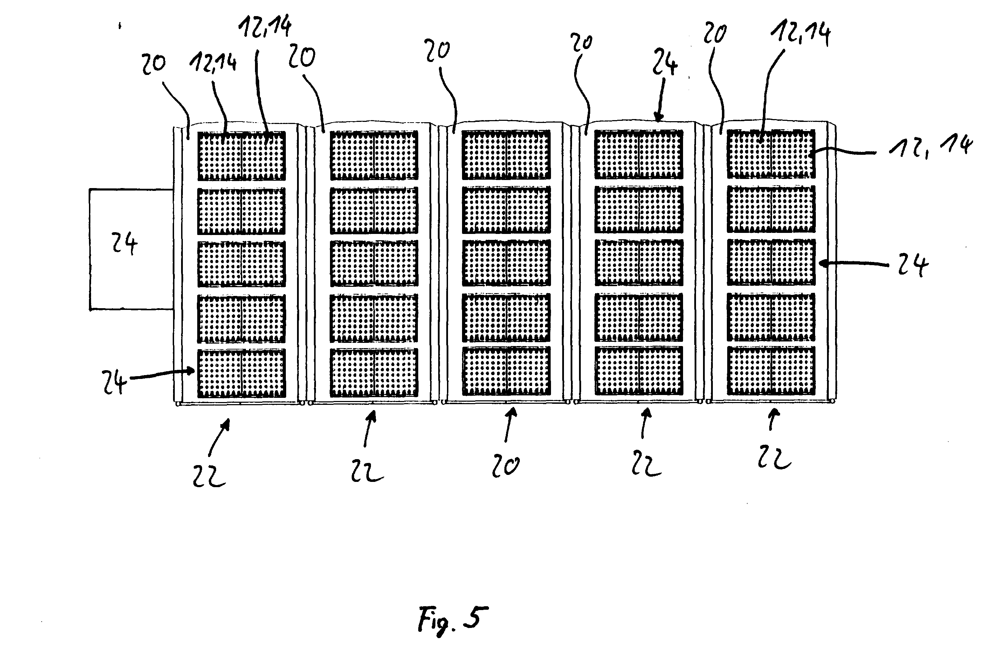

Die Kühlung der Pilze erfolgt erfindungsgemäß während ihrer Anordnung an den Aufnahmeplatten 12, 14 gemäß Fig. 4 in mehreren Kühlkammern 20. Die in Fig. 5 in einer Draufsicht dargestellten, nebeneinander angeordneten Kühlkammern 20 weisen jeweils eine in nicht im einzelnen dargestellte, verschließbare Eingangstür und eine verschließbare Ausgangstür 22 auf. In jede Kühlkammer 20 wird in einer Kälteanlage 24 erzeugte Luft durch nicht dargestellte Zuführleitungen eingeleitet. Die Temperatur der in die Kühlkammern 20 eingeleiteten Luft sowie der Feuchtigkeitsgehalt läßt sich einstellen und regeln.

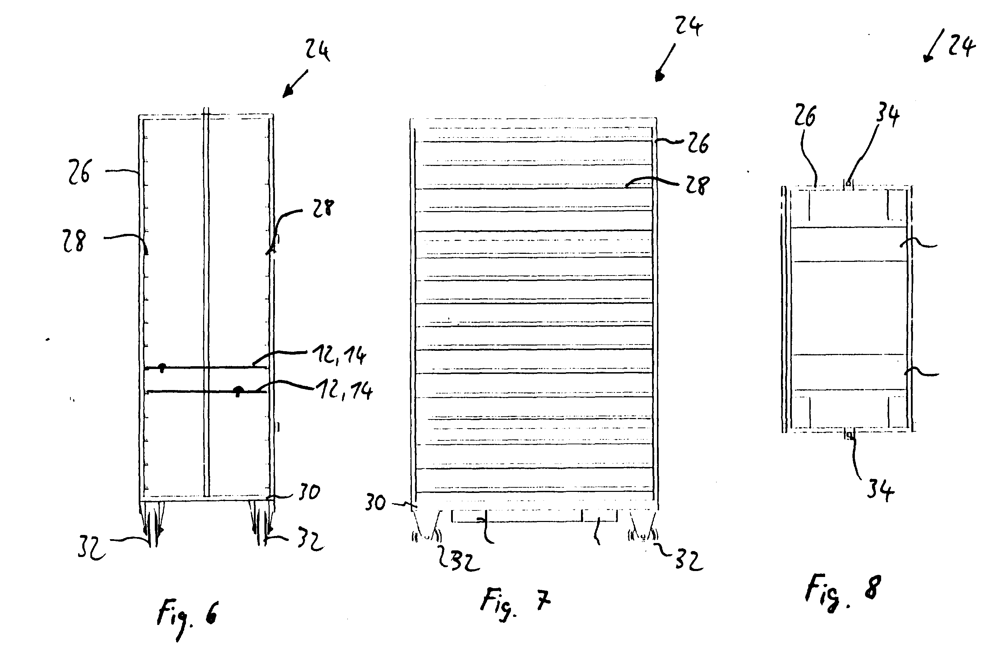

Die die Pilze aufnehmenden Aufnahmeplatten 12, 14 sind, wie Fig. 5 veranschaulicht, jeweils paarweise nebeneinander auf Transportvorrichtungen 24 abgelegt, die in den Fig. 6 bis 8 dargestellt sind. Jede Transportvorrichtung 24 weist ein Rahmengestell 26, das aus metallischen Profilen zusammengesetzt ist, mehrere jeweils paarweise gegenüberliegende Tragschienen 28 und vier an einer Bodenplatte 30 des Rahmengestells 26 montierte Laufrollen 32 auf, so daß die Transportvorrichtung 24 einfach verfahrbar ist. Die Tragschienen 28 sind als Winkelbleche ausgebildet und an das Rahmengestell 26 angeschweißt oder angeschraubt. Ausweislich Fig. 6 sind die Aufnahmeplatte 12, 14 auf die Tragschienen 28 nebeneinander und übereinander in mehreren Ebenen aufgelegt. An den beiden kürzeren Seiten der Transportvorrichtung 24 sind zwei vertikale Haltestangen 34 für eine einfache manuelle Verschiebung der Transportvorrichtung 16 befestigt. Alternativ kann die Transportvorrichtung mit Hilfe eines herkömmlichen Gabelstaplers, dessen Gabeln unterhalb der Bodenplatte 30 ansetzen, auf einfache Weise transportiert werden.

Während der Kühlung in den Kühlräumen 20 wird den Pilzen (Fig. 4) durch Kontakt mit der gekühlten, in die Kühlräume 20 eingeleiteten Luft gekühlt. Darüber hinaus werden die als Aluminiumbleche ausgebildeten Aufnahmeplatten 12, 14 von der Luft gekühlt, die eine geringere Temperatur als die Pilze aufweist. Den Pilzen wird aufgrund des Kontaktes zu den Aufnahmeplatten 14 darüber hinaus Wärme entzogen, die an die Aufnahmeplatten 12, 14 abgegeben wird. Durch die separate Anordnung der zu bearbeitenden Pilze auf den Aufnahmeplatten 12, 14 ist eine besonders effektive und schnelle Kühlung möglich.

Nachdem die Pilze ausreichend gekühlt worden sind, werden sie zu einer Schiebevorrichtung transportiert, beispielsweise mit Hilfe eines Gabelstaplers. Hierzu werden die Türen 22 der Kühlkammern 20 geöffnet.

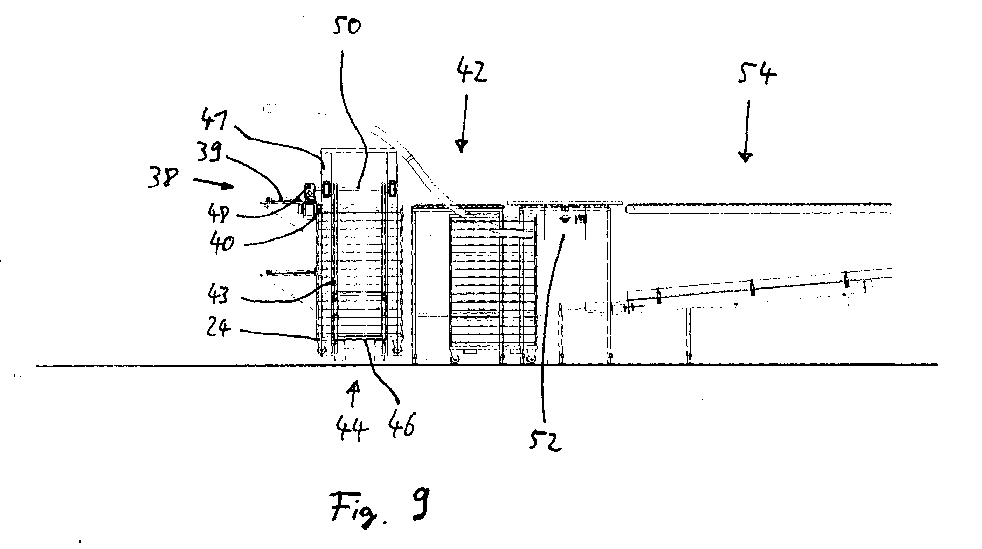

Die in Fig. 9 dargestellte benachbart zu einem Transportband angeordnete Schiebevorrichtung 38 weist ein Rahmengestell 41 und einen mittels eines Pneumatikzylinders 39 hin- und herbewegbaren Schieber 40 auf, der während seiner Bewegung in Kontakt mit einer seitlichen Randfläche einer auf der Transportvorrichtung 24 liegenden Aufnahmeplatte 12, 14 kommt und dabei die Aufnahmeplatte 12, 14 zusammen mit den Pilzen auf ein Transportband 42 schiebt. Das Transportband 42 weist zwei gegenüberliegende Gummiketten auf, auf denen die Aufnahmeplatte 12, 14 mit seitlichen Abschnitten aufliegt.

Eine Hubvorrichtung zum automatischen Anheben und Absenken der Transportvorrichtung 24 ist der Schiebevorrichtung 38 zugeordnet und umfaßt ein an Seilen 43 aufgehängtes und linear geführtes Hubgestell 44 auf, in welches die Transportvorrichtung 24 einhängbar ist. Die Seile 43 sind auf eine drehbar und mittels eines Antriebsmotors 48 antreibbare Welle aufwickelbar, so daß das Hubgestell 46 zusammen mit der Transportvorrichtung 24 anhebbar ist, um eine weitere Aufnahmeplatte 12, 14 mit Pilzen von der Transportvorrichtung 24 auf das Transportband abzuschieben. Nachdem die Aufnahmeplatte 12, 14 auf dem Transportband aufliegt, wird der Schieber mit Hilfe eines pneumatischen hydraulischen Zylinders zurückbewegt. Dieser Vorgang wird so lange wiederholt, bis alle Aufnahmeplatten 12, 14 abgestoßen sind. Anschließend wird die geleerte Transportvorrichtung 24 abgesenkt und von dem Bereich der Hubvorrichtung 44 und Schiebevorrichtung 38 entfernt.

Die auf dem Transportband 42 aufliegenden Aufnahmeplatten 12, 14 werden anschließend einer Schneidvorrichtung 52 zugeführt, die unterhalb des Transportbandes angeordnet ist und die von den Aufnahmeplatten 12, 14 (vgl. Fig. 4) abstehenden Pilzstengel mit Hilfe von rotierenden Messern abtrennt. Anschließend werden die Aufnahmeplatten 12, 14 mit Pilzen ohne Stengel auf ein weiteres Transportband 54 abgegeben und anschließend verpackt.

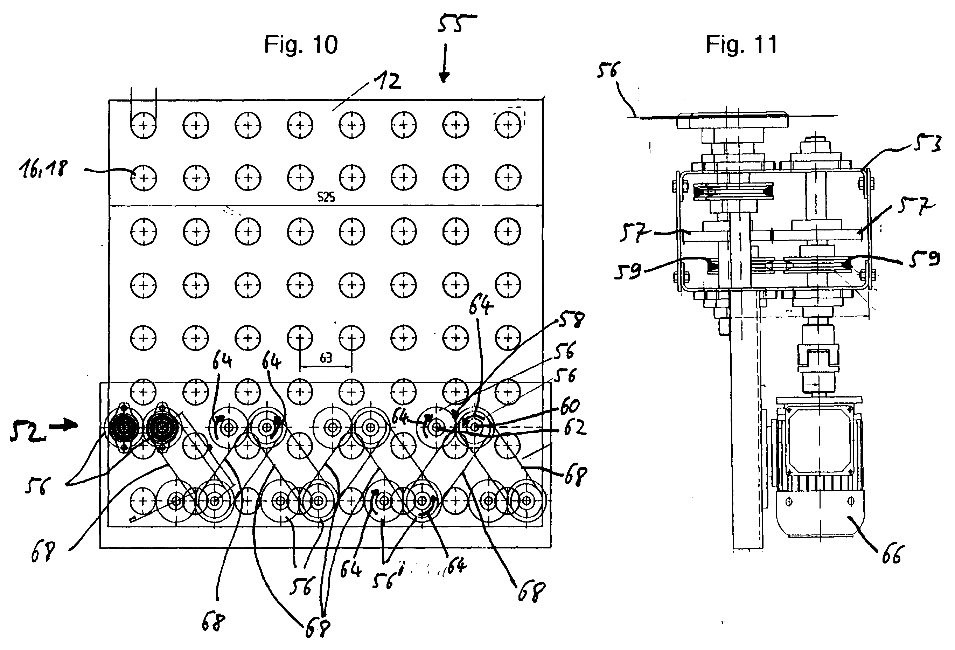

Weitere Ausführungsbeispiele der Schneidvorrichtung 52 sind in den Fig. 10 und 11 dargestellt. Die auf der Aufnahmevorrichtung in Form einer Aufnahmeplatte 12 12 angeordneten Pilze werden so der Schneidvorrichtung 52 mittels des Transportbandes 42 (Fig. 9) zugeführt in Richtung des Pfeils 55 (Fig. 10), daß ein Pilzstengel von zwei rotierenden Messern 56 erfaßt und abgetrennt wird. Die in Fig. 10 gezeigte Aufnahmeplatte 12 weist Bohrungen 16, 18 gleichen Durchmessers auf, die in acht Reihen mit jewils acht Bohrungen angeordnet sind.

Die rotierenden Messer 56 sind als Kreisscheiben ausgebildet und werden gegenläufig um parallele Rotationsachsen 60, 62 rotiert, wobei ein Pilzstengel den Kreisscheiben etwa mittig in einen Schnittbereich 58 zwischen den Rotationsachsen 60, 62 zugeführt wird. Im Schnittbereich überlappen sich die unterhalb der Aufnahmeplatten angeordneten (Fig. 9) Kreisscheiben mit ihren äußeren Randbereichen geringfügig um etwa 2 mm. Die als Messer ausgebildete Kreisscheiben drehen dabei im Schnittbereich "nach innen" in Richtung der Pfeile 64, so daß ein Pilzstengel "eingezogen" wird. Es hat sich in der Praxis gezeigt, daß sich auf diese Weise ein besonders glattes, sauberes Schnittbild ergibt, die Pilze, insbesondere die Pilzfüße nicht beschädigt werden und die auf der Aufnahmevorrichtung abgelegten Pilze während des Schneidens nicht ihre Position ändern und insbesondere nicht hochgeschoben werden.

Die Kreisscheiben werden - wie den Fig. 10 und 11 entnehmbar ist - wie folgt mittels einen Elektromotors 66 angetrieben: Der Elektromotor 66 treibt im Ausführungsbeispiel mittels einer Messer-Welle das Messer 56' an. Jede an einem Rahmen 53 drehbar gelagerte Messer-Welle weist ein Zahnrad 57 auf, welches mit einem Zahnrad 57 einer benachbarten Messer-Welle in Eingriff steht, so daß benachbarte Wellen und somit benachbarte Messer 56 gegenläufig rotieren (Pfeile 64). Mittels an den Messer-Wellen unterhalb der Zahnräder 57 befestigter Keil- oder Zahnriemen 68 und zugehöriger an den Messer-Wellen befestigter Riemenräder 59 werden die schräg in einer weiteren Reihe von Messern 56 angeordnete Messer-Wellen und somit Messer 56 rotierend angetrieben.

## Patentansprüche

**1.** Verfahren zum Bearbeiten von Pilzen o. dgl.,
dadurch gekennzeichnet, daß die auf einer Aufnahmevorrichtung separat abgelegten Pilze gekühlt werden.

**2.** Verfahren zum Bearbeiten von Pilzen o. dgl., insbesondere nach Anspruch 1,
dadurch gekennzeichnet, daß die Pilze unmittelbar nach einem manuellen Ernten separat auf einer im wesentlichen ebenen Aufnahmevorrichtung abgelegt und anschließend gekühlt werden.

**3.** Verfahren nach Anspruch 2,
dadurch gekennzeichnet, daß die Pilze auf einer mehrere Bohrungen aufweisenden Aufnahmeplatte abgelegt werden, wobei ein Pilzkopf auf der Aufnahmeplatte aufliegt und ein Pilzstengel in der Bohrung angeordnet ist, und die Pilze während der Kühlung auf der Aufnahmeplatte angeordnet sind.

**4.** Verfahren nach Anspruch 2 oder 3,
dadurch gekennzeichnet, daß die Pilze während der Kühlung in mehreren Reihen auf der Aufnahmevorrichtung angeordnet sind.

**5.** Verfahren nach Anspruch 3 oder 4,
dadurch gekennzeichnet, daß die Pilze während der Kühlung auf mehreren, parallel und beabstandet zueinander angeordneten Aufnahmeplatten angeordnet sind.

**6.** Verfahren nach Anspruch 5,
dadurch gekennzeichnet, daß die die Pilze aufnehmenden Aufnahmeplatten auf einer einen Rahmen und mehrere Tragschienen aufweisenden Transportvorrichtung gelagert sind.

**7.** Verfahren nach mindestens einem der vorstehenden Ansprüche,
dadurch gekennzeichnet, daß die Pilze durch Luft, vorzugsweise einen Luftstrom, gekühlt werden.

**8.** Verfahren nach Anspruch 7,
dadurch gekennzeichnet, daß der Feuchtigkeitsgehalt der Luft bzw. des Lufstromes eingestellt ist.

**9.** Verfahren nach Anspruch 8,
dadurch gekennzeichnet, daß der Feuchtigkeitsgehalt in der Luft bzw. dem Luftstrom auf etwa 95 - 99%, vorzugsweise 97 - 99%, eingestellt ist.

**10.** Verfahren nach den Ansprüchen 7 bis 9,
dadurch gekennzeichnet, daß die Temperatur der Luft bzw. des Luftstromes im Bereich zwischen 0 - 2°C, vorzugsweise bei 0,5°C liegt.

**11.** Verfahren nach mindestens einem der vorstehenden Ansprüche,
dadurch gekennzeichnet, daß der Luftstrom die Aufnahmevorrichtungen im wesentlichen parallel anströmt.

**12.** Verfahren nach mindestens einem der vorstehenden Ansprüche,
dadurch gekennzeichnet, daß die Aufnahmeplatten nach der Kühlung mittels einer Schiebevorrichtung auf ein Transportband geschoben werden.

**13.** Verfahren nach Anspruch 12,
dadurch gekennzeichnet, daß die auf der Aufnahmevorrichtung angeordneten Pilze nach der Kühlung einer Schneidvorrichtung zugeführt und die Pilzstengel abgeschnitten werden.

**14.** Verfahren nach Anspruch 13,
dadurch gekennzeichnet, daß die Pilzstengel durch rotierende Messer abgetrennt werden.

**15.** Verfahren nach Anspruch 14,
dadurch gekennzeichnet, daß die auf der Aufnahmevorrichtung angeordneten Pilze so der Schneidvorrichtung zugeführt werden, daß ein Pilzstengel von zwei rotierenden Messern erfaßt und abgetrennt wird.

**16.** Verfahren nach Anspruch 15,
dadurch gekennzeichnet, daß die zwei rotierenden Messer als Kreisscheiben ausgebildet sind und gegenläufig um parallele Rotationsachsen rotiert werden, wobei ein Pilzstengel den Kreisscheiben etwa mittig in einen Schnittbereich zwischen den Rotationsachsen zugeführt wird.

**17.** Verfahren nach Anspruch 13,
dadurch gekennzeichnet, daß die Aufnahmebleche sukzessive von einem pneumatisch hin- und herbewegbaren Schieber von der Transportvorrichtung abgeschoben werden und die Transportvorrichtung durch eine Hubvorrichtung relativ zu dem Schieber auf- und abbewegbar ist, so daß die mehreren auf der Transportvorrichtung übereinander angeordneten Aufnahmeplatten auf das Transportband geschoben werden können.

**16.** Verfahren zum Verpacken von Pilzen, insbesondere nach Durchführung eines Verfahrens nach einem der vorstehenden Ansprüche,
dadurch gekennzeichnet, daß die auf einer Aufnahmevorrichtung im wesentlichen separat abgelegten Pilze mit einer Sensiervorrichtung erfaßt werden und anschließend ein separater Pilz mit einer Greifvorrichtung von der Aufnahmevorrichtung abgenommen und anschließend in einem Behältnis bzw. auf einem Transportband von der Greifvorrichtung abgelegt wird.

**17.** Verfahren nach Anspruch 16,
dadurch gekennzeichnet, daß die Sensiervorrichtung optisch die Position und/oder Größe eines auf der Aufnahmevorrichtung angeordneten Pilzes erkennt und die Greifvorrichtung in Abhängigkeit von der erkannten Position und Größe eines Pilzes den Pilz an einem vorgegebenen Ort ablegt.

**18.** Verfahren nach Anspruch 16 oder 17,
dadurch gekennzeichnet, daß die Greifvorrichtung mindestens einen Vakuumsaugkopf aufweist, der mit einem Pilzkopf zusammenwirkt und einen Pilz aufgrund eines Unterdrucks greift.

**19.** Verfahren nach Anspruch 18,
dadurch gekennzeichnet, daß der Saugkopf einen gepolsterten Kontaktring aufweist, der auf den Pilzkopf aufgesetzt wird.

**20.** Verfahren nach einem der Ansprüche 16 bis 19,
dadurch gekennzeichnet, daß die Greifvorrichtung mehrere individuell bewegbare Greifarme mit jeweils einem Saugkopf aufweist.

**21.** Verwendung einer vorzugsweise mit Bohrungen ausgebildeten Aufnahmeplatte zum Kühlen von auf der Aufnahmeplatte angeordneten Pilzen o. dgl.

**22.** Vorrichtung zum Verarbeiten von Pilzen o. dgl.,
mit einer Kühlkammer, in die von einer Kühleinrichtung erzeugte Kühlluft einleitbar ist,
gekennzeichnet durch eine in die Kühlkammer einbringbare Transportvorrichtung zur Aufnahme mindestens einer Aufnahmevorrichtung, auf der Pilze separat abgelegt sind.

**23.** Vorrichtung nach Anspruch 22,
dadurch gekennzeichnet, daß die Aufnahmevorrichtung als mit mehreren Bohrungen ausgebildete Aufnahmeplatte ausgebildet ist und die Transportvorrichtung mehrere Tragschienen aufweist, auf denen mehrere Aufnahmeplatten angeordnet sind.

**24.** Vorrichtung nach einem der vorstehenden Ansprüche,
dadurch gekennzeichnet, daß der Kühlkammer eine Schiebevorrichtung nachgeordnet ist, in die eine Transportvorrichtung einfahrbar ist, wobei die Schiebevorrichtung einen mittels eines Pneumatik- oder Hydraulikzylinders hin- und herbewegbaren Schieber zum Herunterschieben der Aufnahmevorrichtungen von den Tragschienen der Transportvorrichtung aufweist.

**25.** Vorrichtung nach Anspruch 24,
dadurch gekennzeichnet, daß die Schiebevorrichtung eine Hubvorrichtung zum Auf- und Abbewegen der Transportvorrichtung aufweist.

**26.** Vorrichtung nach Anspruch 24,
dadurch gekennzeichnet, daß die Hubvorrichtung mit mindestens einer Seilwindenanordnung ausgebildet ist.

**27.** Vorrichtung nach einem der vorstehenden Ansprüche,
gekennzeichnet durch eine Schneidvorichtung (52) zum Abtrennen von Pilzstengeln von auf einer Aufnahmevorrichtung (12) aufliegenden Pilzen.

**28.** Vorrichtung nach Anspruch 27,
dadurch gekennzeichnet, daß Schneidvorichtung (52) mindestens zwei paarweise angeordnete rotierende Messer aufweist.

**29.** Vorrichtung nach Anspruch 28,
dadurch gekennzeichnet, daß die zwei rotierenden Messer als Kreisscheiben ausgebildet sind und gegenläufig um parallele Rotationsachsen rotierbar sind, und ein Pilzstengel oder mehrere benachbarte Pilzstengel den Kreisscheiben etwa mittig in einen Schnittbereich zwischen den Rotationsachsen zugeführt wird/werden.
